# EUROPEAN PATENT SPECIFICATION

(11) **EP 0 360 599 B1**
(45) Date of publication and mention of the grant of the patent: **17.06.1998**
(21) Application number: 89309592.7
(22) Date of filing: 20.09.1989
(51) Int. Cl.: G06F 3/033, G06T 3/00

(54) **A video processing system for movement simulation**
Videobildverarbeitungssystem zur Simulation von Bewegungen
Système de traitement d'image vidéo pour simuler un mouvement

(30) Priority: 20.09.1988 GB 8822003
(43) Date of publication of application: 28.03.1990
(73) Proprietor: QUANTEL LIMITED, Newbury Berkshire RG13 2LT (GB)
(72) Inventor: McNeil, Ian, Berkshire RG13 2LT (GB)
(74) Representative: Milhench, Howard Leslie

(56) References cited:
- US-A- 4 600 919

## Description

The present invention relates to a video processing system for use in creating apparent three dimensional movement of a video picture on a display screen.

### BACKGROUND OF THE INVENTION

Video processing machines for simulating three dimensional movement of a live video picture are known. Hitherto, the controls for such machines have included switching devices for selecting operations and movement detectors, such as levers and tracker balls, for defining the temporal nature of the selected effect. These controls provide a means by which a user of the machine can among other things achieve the effect of apparent three dimensional movement of for example live video pictures on a display screen. However, such controls are limited in that multiple actuations of different levers and switches together with movement of the tracker ball are required in order to achieve the desired effect. Thus, efficient use of the machine requires a high level of experience and dexterity on the part of the user and, whilst highly satisfactory effects are achievable using these controls, an undue amount of time can be spent by the user in achieving desired results.

US-A-4600919 was cited during examination by the European Patent Office. The publication describes an animation technique in which data defining key frames is used to define extremes of action in a figure as the figure appears to move in an animation sequence. Data representing the figure for frames between the key frames is generated by interpolating the key frame data.

### OBJECTS AND SUMMARY OF THE INVENTION

The principal object of the present invention is to provide a solution to the above and associated limitations and to provide an improved video processing system for image manipulation to simulate movement.

The invention generally resides in the concept of providing an improved video processing system in which a set of axes can be displayed over an image and the image can be manipulated by reference to said axes by a user by way of input means to realise the desired simulated movement effect.

According to the invention in one of its aspects therefore there is provided a video processing system for use in creating apparent three dimensional movement of a video picture on a display screen, the system comprising: means for generating at least one set of axes having a predetermined positional relationship to the picture for display with the picture; user operable input means for generating coordinate and control data in response to user manipulations thereof; and processing means responsive to said user operable input means for selecting at least one axis in said at least one set of axes and for processing image data to control apparent rotational movement of the image about, and/or apparent translational movement in the direction of the way depicted by a set of user selected axes.

In an embodiment of the invention, to be described in greater detail hereinafter, a plurality of sets of axes are available to be selectively displayed and individual axes within selected sets can be selected by the user by way of a cursor displayed on the display screen, the position of the cursor being controlled by use of the user operable input means, namely in the embodiment in question a pressure sensitive stylus and an associated touch tablet. The spatial relationship between the various sets of axes can be defined by the user by way of the cursor displayed on the display screen and manipulated by the user with his stylus and touch tablet. By providing a plurality of sets of axes and providing for selective movement in each axes set, the system provides a means by which different levels of movement of an image may be achieved as will become apparent from the following.

A first level set of axes will normally be provided at the centre of a picture, that is to say at the centre of a framed image, and the system arrangement enables the user to rotate the picture with any axis of such first set of axes or to move the picture with the origin of the axes set along the line of any axis as required. The first set of axes is normally set such that two of the axes are arranged to lie parallel to the x and y directions of the picture (and of the display screen, assuming the picture edges are parallel to the edges of the screen which will normally be the case) and a third axis is arranged to be perpendicular to the picture (and to the screen). Translation of the picture along the x and y axes, when the x and y axes of the picture are parallel to the x and y axes of the display screen, will simply cause the picture to shift left or right and up or down on the display screen, while translation along the z-axis will cause the size of the picture to change as it moves in 3D space away from or towards the display screen. The effect of rotation of the picture about an axis needs no explanation.

Higher level sets of axes are also made available to be utilised successively, and can be located by the user at any desired position in three dimensional space remote from the first axis location. The origin of the first set of axes, also called the picture level axes, (i.e. the centre of the image) is maintained at a fixed distance in three dimensional space from the origin of the second level axes and in this way rotation and translation of the picture in relation to a second level axis will cause movement of the picture in three dimensional space as though the centre of the picture were fixedly connected to one end of a rigid arm having its other end located at the origin of the second level axes and movable therewith in rotation and translation. Thus, translation and rotation of the second level axes may be effected to change the shape and size of the picture to accommodate changes in perspective and viewing position as the image is moved. Further higher levels of axes may be defined at other points in three dimensional space as required. Each level of axes will be maintained at a fixed distance from the next higher level axes and in this way complex movements of the picture through three dimensional space may be defined by the user.

As will be explained in the following, in use of the system of the invention to simulate three dimensional movement of a video picture, the first or picture level set of axes is automatically displayed at the centre of the picture when the system is activated. The user can then translate and rotate the picture level set of axes as required by use of his stylus and touch tablet. When a second level set of axes is required this is derived from the picture level set of axes which is, in effect, dragged out to the required origin position of the second set of axes, again by use of the stylus and touch tablet. The second set of axes as thus established are thus oriented identically to the orientation of the picture level set of axes at the time when the second set of axes are set up. Once the second set of axes has been set up, the user has the facility to rotate and translate in the second axes with corresponding movement of the picture. Subsequent axes sets are similarly established, each subsequent axes set being dragged out from the preceding set as above described in the case of the second and picture level set of axes. All axes sets that are set up by a user remain displayed and the user has the option to work in any selected one of a series of sets of axes thus established.

In order to facilitate use of the system each set of axes can be displayed as a set of lines representing the orientation of each axis in the set and accompanying labels which identify each axis, the system being arranged such that selection of a label by cursor control enables rotation about the associated axis to be effected and selection of a line enables translational movement along the associated axis to be effected.

Furthermore, the system may be configured so as to enable the display of a locus representing the movement of the picture in three dimensional space and/or representing the movement of the origin of a user selected set of axes in three dimensional space. The video picture may comprise a sequence of video frames and the system can be arranged such that at least some of the frames can be defined by the user as key frames which are displayed at user defined position within the three dimensional movement. The locations of other frames in the sequence not having a user defined location can be calculated automatically by extrapolation between user defined keyframes. In this case the locations of keyframes in the movement are represented by first markers in the locus displayed on the display screen, and the locations of other frames are represented by second markers in the locus.

Thus according to another aspect of the invention there is provided a video processing system for use in creating apparent three dimensional movement of a video picture on a display screen comprising: user operable input means for providing positional data and control data representative of user manipulation thereof; transforming means responsive to said control data from said user operable input means for determining transformation data; position defining means responsive to said transformation data for defining positions of a predetermined element of said video picture during said movement; locus signal generating means responsive to said position defining means for generating locus signals representing a locus connecting said positions to depict the movements of said element; displaying means connected to receive said locus signals for displaying the locus; and said transforming means controlling apparent translational and/or rotational movement of the picture along the locus.

Further features of the invention are as set forth in the appended claims and, together with those features above mentioned, will become clear from consideration of the detailed description of an exemplary embodiment of the invention which will be given in the following with reference to the accompanying drawings.

### BRIEF DESCRIPTION OF THE DRAWINGS

Figure 1 shows a video processing system embodying the present invention;
Figure 2 shows an example of a typical display generated while using the system of Figure 1; and
Figure 3 shows a locus representing movement of a point in the picture or the origin of a set of axes.

### DESCRIPTION OF THE PREFERRED EMBODIMENT

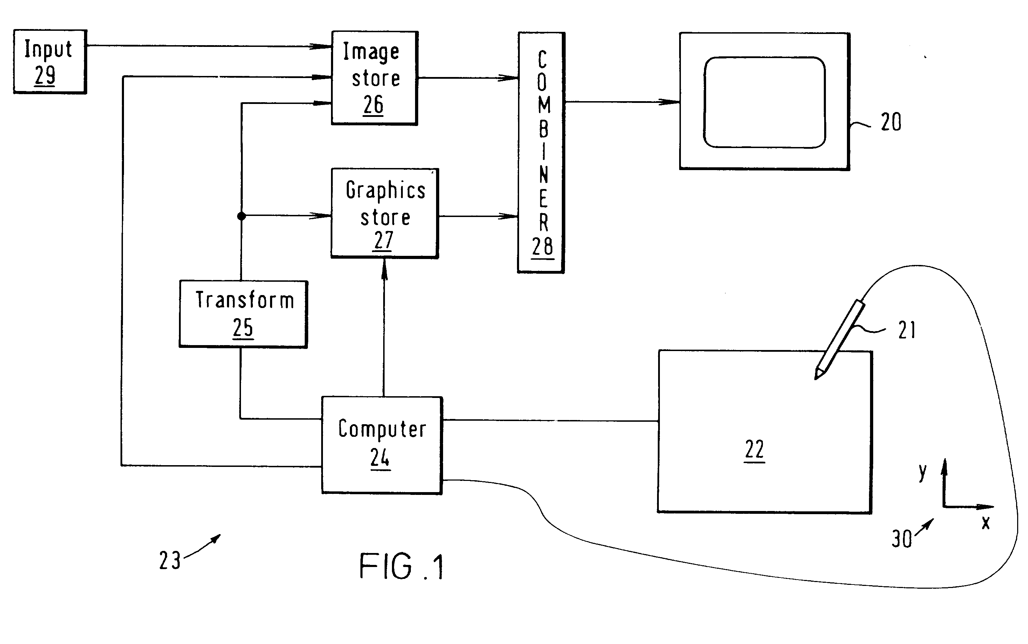

A video processing system embodying the present invention is shown in Figure 1 as comprising a television type monitor 20, a pressure sensitive stylus 21 and a touch tablet 22 each connected to a processing system 23. The processing system 23 includes a control computer 24, an address transforming circuit 25, an image framestore 26, a graphics framestore 27 and a video combiner 28. In operation an input signal is supplied by an input device 29 which for live video from a camera or an output from an analog video tape recorder will include an analog to digital converter. Alternatively the input may be in, say, D1 digital format, an approved digital standard for making digital video tape recordings from tape, disc or other digital processing system.

The processing system is arranged under software control 23 to enable video signals supplied thereto via the input device 29 to be manipulated frame by frame in real time to produce special rotational and translational effects by writing pixels to the image framestore 26 in a first order and reading them from the framestore 26 in a different order. Image manipulation systems which operate in this way are known and generally work as either read side systems, in which image data is written into a store in normal raster order and then read from the store for display in a different order, or write side systems, in which the order of the data is changed as it is written to the store and then is read conventionally. One example of a machine which writes to the store in normal raster order and then reads in a different order (read side) is manufactured by the present Assignee and sold under the trade mark "ENCORE" and is described in European Patent Publication No. EP-A-0283159 and in corresponding US Patent Application No. 159780 and Japanese Patent Application No. Sho 63-62099. Another machine which performs its manipulations while writing to a framestore and then reads in a conventional way (write side) is manufactured by the present Assignee and sold under the trade mark "MIRAGE" and is described in UK Patent Applications Nos. 2119594 and 2158671. Write side processing is generally the more difficult, and the described embodiment of the present invention as represented in Figure 1 is configured as a read side system though the invention could also be embodied in a write side system.

The system embodying the present invention does not require the control panel having switch buttons and a tracker ball that are provided in our earlier ENCORE machine but instead is arranged under software control so that all operations can be effected by use of the pressure sensitive stylus 21 upon the touch tablet 22. More particularly, in the system embodying the invention, a movement of the stylus 21 on the touch tablet causes the touch tablet to output address signals representing movements in x and y directions as shown by the axes 30 in Figure 1. An additional parameter of the movement is defined by the pressure that is applied to the stylus as sensed by means of a pressure transducer incorporated into the stylus, for example by application of stylus pressure in an on/off fashion to define start and end points of an operation, e.g. the origin positions of successively established sets of axes. The stylus 21 and touch tablet 22 enable the user to control the movement of a cursor on the display screen and in this way a user is able to select an operation, effect it and store the result without looking away from the monitor 20. The vast number of picture movements achievable with a system of this type can be combined with previously known image processing features or options such as sizing, corner pinning etc selected from a menu displayed on the monitor.

Movement of the stylus swiftly across the edge of the touch tablet (a process known as swiping) is arranged in per se known manner to call up a menu of user selectable options which can be displayed anywhere in the screen, for example in the lower, or upper, quarter of the screen. The menu may obscure the display area below it or alternatively it may be made transparent. As the stylus is placed onto the touch tablet a cursor is displayed on the monitor and is controlled (moved) by moving the stylus on the touch tablet. An operation is selected by the user by moving the stylus so that the cursor appears over the appropriate menu item and then pressing the stylus onto the touch tablet so as to cause the pressure transducer to output a signal to indicate to the system the selection of the corresponding menu option. The system according to the present invention is therefore arranged by its software to be controlled in a very similar way to the video graphics system manufactured by the present Assignee and sold under the trade mark "PAINTBOX".

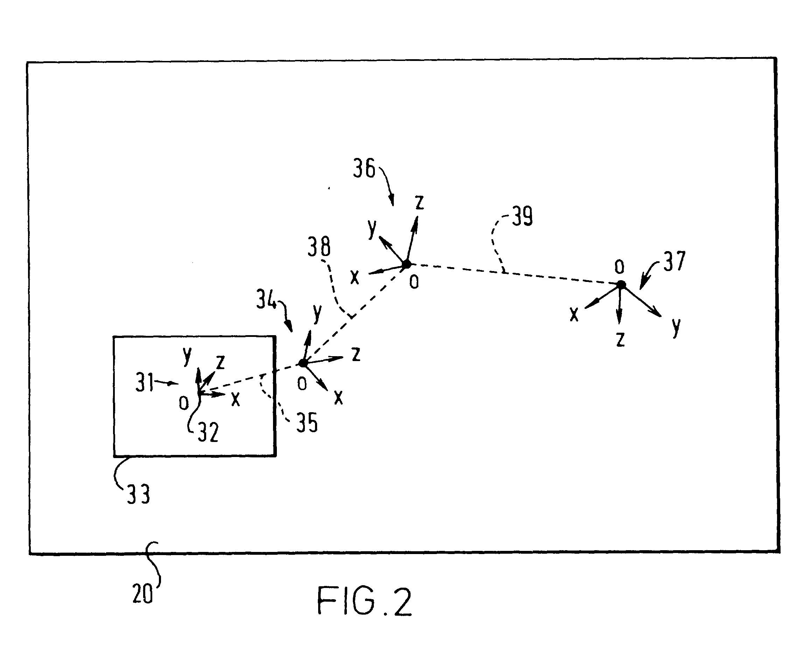

As can be seen from the exemplary showing of Figure 2 the image 33 read from store 26 has been reduced in size so that it occupies only part of the full screen of monitor 20. The system is arranged such that translational image movements can be controlled by operation of the stylus on the touch tablet so as to position the cursor over an x, y or z letter associated with a particular set of axes. With the cursor so positioned, pressing the stylus on the touch tablet (and thereby activating the pressure transducer therein) causes the respective axis to be selected and thus allows movement in the selected axis direction to be effected by further movement of the stylus. Similarly identifying an axis by placing the cursor over the line representing it and pressing the stylus to indicate selection allows rotation about that axis to be controlled by the user. Since the origin of the first set of axes 31 is always at the centre 32 of the picture, movement in relation to any point in 3D space other than in relation to the centre 32 of the picture requires the operator to ascend to a higher level, i.e. a different set of axes 34, 36, 37.

The on screen menu (not shown) provides for the selection of higher level axes. On selecting the second level, say, a second level reference point (origin) 34, with its accompanying set of axes oriented identically to the picture level axes 31, may be positioned anywhere on the screen by use of the stylus. By further use of the stylus in a manner as above described for the picture level axes 31 movements in this second set of axes can be effected. At this second level the user instructions define movements of the origin of the picture level axes 32 about the origin of the second level axes 34. Similarly, at the third level movements of the origin of the second level axes 34 are defined with respect to the origin of the third level axes 36, and at the fourth and in this case highest level movement of the origin of the third level axes 36 is defined with respect to the origin of the fourth level axes 37.

Figure 2 shows the way in which picture movements may be controlled at different hierarchical levels by the use of a series of linked axes. On the display screen 20 a first set of axes 31 referred to hereinafter also as picture level axes, are automatically set up at the centre 32 of a picture 33 in response to user initiation of the system to enable the user selectively to rotate the picture with, or translate the picture in the direction of, any of the axes 31x, 31y, 31z, such rotation and/or translation being effected conventionally as hereinbefore described. Two of the axes 31x, 31y lie parallel to the x and y directions of the picture 33 and initially (before any picture rotation) of the display screen 20, and the third axis 31z is arranged to be perpendicular to the picture and thus initially (before any picture rotation) to the display screen 20. Each axis 31x, 31y, 31z is represented on the display screen by a line indicating the orientation of the axis and a letter x, y or z identifying the axis, and image manipulation is effected by operation of the stylus/touch tablet to move a cursor on the display screen and by means of the cursor to select either rotation or translation relative to a selected axis. Higher levels of axes may also be utilised. A menu (not shown) that is provided on the display screen enables the user to select a higher level axes set, for example second level axes 34, and once selected the axes 34 can be located by use of the stylus and its pressure sensitive facility on the touch tablet at any point in three dimensional space and thereafter rotation and/or translation in the second axes level can be effected. The distance in three dimensional space between the origin 32 of the picture level axes 31 and the origin of the second level axes 34 is held fixed once it has been set by the user, and is represented by the broken line 35 in the drawing. Further higher levels of axes, for example third level axes 36 and fourth level axes 37, may also be defined at other points in three dimensional space if so required, the origins of such axes being held respectively at user defined fixed distances, represented in Figure 2 by broken lines 38, 39, from the origins of the axes at the level below. Image manipulation by rotation and/or translation relative to any axis of the successive hierarchical levels of user defined axes is effected exactly as above described for the picture level axes.

The picture manipulation movements achievable by the present invention may be likened to the behaviour of a multiplely articulated arm moving through three dimensional space. This notional articulated arm would have three links corresponding to the broken lines 35, 38 and 39 connected by ball joints at the origins of the axes 34 and 36 and with the centre 32 of the picture rotatably connected to the link 35 by a ball joint at the origin of axes 31 and the link 39 also connected to a ball joint at the origin of the axes 37. Since the articulated arm is merely notional, the links are such as to allow total movement of the picture 36 apparently in three dimensional space, including the situation of two links of the arm occupying the same space. The link system is set up by the system user who determines the initial positions of the ball joints 34, 36, 37 and the lengths of the links 35, 38, 39 and the user is then free to define movements of the picture by rotations and translations within the link system.

In order to facilitate operation of the system, each level of operation (i.e. each set of axes and associated graphics) advantageously has an associated color relating to that level so that movements in any given level are represented in its particular color. Thus the axes 31 for movement at the picture level are displayed in a picture level color, and the higher level axes 34, 36, 37 are displayed in different colors.

During the creation of a move, i.e. 3D movement of the picture, only a single picture frame 33 is read from the image store 26 and displayed on the monitor 20 and this picture frame 33 remains on the monitor's display whilst a move is being created. Video data for the or each set of axes 31, 34, 36, 37, and any other information to be displayed over the picture, for example the cursor, is stored in the graphics framestore 27 which is addressed in synchronism with the image store 26. However once the move has been defined, sequential frames of live video etc may be written to the store 26 via input device 29. The computer 24 includes a memory device for storing a sequence of manipulated read address signals representing the move. As the move progresses a narrow band of colour can usefully be arranged to move across the top of the screen to inform the operator how much memory space is available, and in this way all the information required by the operator is displayed on the monitor 20. The apparent three dimensional movement of the picture as defined by the operator is stored as a sequence of address signals defining how each frame of the video picture sequence will be manipulated to represent the movement. Movements are usually required to be smooth but not all addresses, either spatially or temporally, need to be stored, because intermediate addresses may be calculated by extrapolation. Thus in defining a movement only certain addresses for so-called "key" frames, i.e. image frames having a position actually defined by the operator, need to be stored and intermediate frames can be calculated by extrapolation between key frame addresses. Thus for example, a pendulum movement of the picture may be defined by movement along the X axis about a higher level reference point. The positions of maximum displacement in such a move may be defined as key frames and intermediate frames may be automatically calculated. The pendulum effect is then created by running the system and its speed is determined by the number of intermediate frames of the input picture sequence which are generated between key frames.

For a particular video production, and for future general reference, an operator may store a library of effects on a disc memory device which provides fast and substantially random access loading of data to the system's transforming circuit 25. Effects are difficult to describe and classify in a way which has any obvious meaning and therefore a particular previously defined effect will usually be arranged to be located by the user by previewing a number of effects from disc. The provision of the graphics store 27 also allows additional features to be provided which are not present in hitherto known systems. In accordance with another feature of this embodiment, the system may advantageously be arranged to display on the monitor address data in the form of a locus which shows the movement of a predetermined picture element over the duration of the effect. The locus, or string, represents the movement over time of the effect and thus may be previewed by the user to assist in the identification of a previously defined effect.

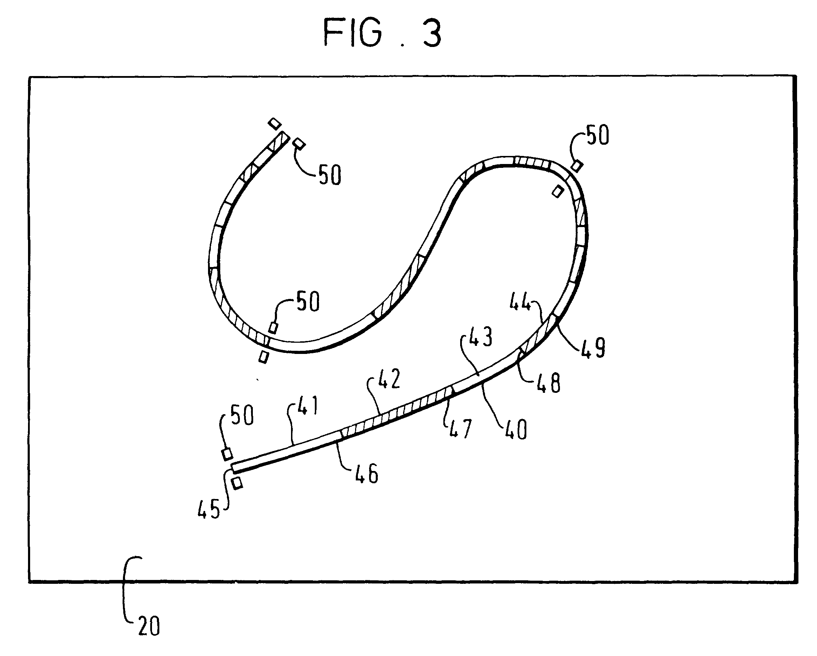

Figure 3 of the accompanying drawings is an exemplary showing of the locus 40 of the centre point of the picture, i.e. the origin of axes 31, which constitutes in this example the abovementioned predetermined picture element. Locii are displayed representing movement of the origin of each set of axes in the corresponding colour associated with that level. The locus 40 thus may be displayed as indicated schematically in Figure 3 as a series of segments 41 to 44 etcetera alternating in colour between the relevant level colour and another predetermined colour, say black. The points 45 to 49 at which segments meet represent the positions of frames of the video image, and the number of segments along the locus 40 represents the speed of the effect. A relatively large number of small segments will thus represent a slow effect, whereas a few large segments will represent a fast effect. The positions of key frames may be identified by markers such as the small lines 50 that are shown in Figure 3 extending perpendicularly to the locus 40 at the relevant positions.

Locii are calculated using the same process that is used on each image picture point during the effect. As is known for example from our European Patent Application, Publication No. EP-A-0283159 aforementioned three dimensional movement of a picture which gives rise to new co-ordinates (x',y',z') in three dimensional space can be defined as a function of the original coordinates (x, y) in the two dimensional space of the monitor display. Once defined, the three dimensional coodinates are then projected onto the two dimensional plane of the monitor display screen and this gives new two dimensional co-ordinates (x", y") as functions of the three dimensional co-ordinates. The movement of the picture may therefore be defined as two functions defining the positions of x" and y" with respect to the original x and y coordinates. Thus x", y" coordinates are calculated for the centre of the image for each frame making up the effect.

Once a locus or string 40 has been calculated and displayed on the monitor 20, via graphics store 27, it can be put to other uses in addition to assisting identification of the nature of the effect. The system can be arranged so that the locus may be modified interactively by operation of the stylus 21 upon the touch tablet 22 with the modified coordinates then being fed to the computer 24 to define the position of new key frames. Once a new key frame position has been set, a line curving algorithm can be used to reposition other frames to maintain a smooth movement effect over time. As the cursor moves over a locus it jumps between the discrete frame positions 45 to 49 for example. A frame representing the shape of the picture at each frame position on the locus can also be displayed. Thus the shape of the locus in 3D space can be changed by moving the cursor to a point 45 to 49 and dragging the point to a new 3D position. A frame moved in this way need not be a key frame, it can instead be an intermediate frame, but it will become a key frame once it has been repositioned.

There has thus been described a video processing system for use in creating three dimensional movement of a video image on a display screen 20. At least one set of axes is displayed on the display screen and a computer 24, in response to signals from a user operated stylus 21 and touch tablet 22, controls the manipulation of image data in an image store 26 to control rotational or translational movement of the image, with respect to an axis selected by the user. In the described embodiment several sets of linked axes may be defined. Rotational and translational movement with respect to an axis is controlled respectively by selecting a marker identifying the axis or by selecting a line representing the axis. Selection is made by way of a cursor under the control of the stylus and touch tablet. The system can also display a locus representing the user defined movement of e.g. the centre of the image.

Having thus described the present invention by reference to a preferred embodiment it is to be well understood that the embodiment in question is exemplary only and that modifications and variations such as will occur to those possessed of appropriate knowledge and skills may be made without departure from the scope of the invention as set forth in the appended claims.

## Claims

1. A video processing system for use in creating apparent three dimensional movement of a video picture on a display screen (20), the system comprising:
means (24,25,27) for generating at least one set of axes (31,34,36,37) having a predetermined positional relationship to the picture for display with the picture;
user operable input means (21,22) for generating coordinate and control data in response to user manipulations thereof; and
processing means (24,25) responsive to said user operable input means for selecting at least one axis in said at least one set of axes (31,34,36,37) and for processing image data to control apparent rotational movement of the image about, and/or apparent translational movement in the direction of the way depicted by a set of user selected axes.

2. A system as claimed in claim 1, in which the said at least one set of axes (31) is positioned at the centre of the picture (33).

3. A system as claimed in claim 1 or 2 in which a plurality of sets of axes (31,34,36,37) are generated for display,
the system further comprising means (27) for displaying a cursor on the display screen, the position of which cursor is controlled by use of the user operable input means to enable selection of individual sets of axes (31,34,36,37) by way of the cursor.

4. A system as claimed in claim 3, further comprising means (25) for defining the spatial relationship between each set of axes under user control by way of the cursor displayed on the display screen.

5. A system as claimed in claim 1 in which each set of axes is displayed as a set of lines representing the orientation of each axis and a set of labels (X,Y,Z) which identify each axis, the system comprising rotation means responsive to the selection of a label for effecting rotation about the or each associated axis; and translating means responsive to the selection of a line for effecting translational movement in the direction of the associated axis.

6. A system as claimed in claim 1, in which the video picture comprises a sequence of video frames (33), and the system comprises key frame defining means for defining at least some of the frames of said sequence as key frames for display at user defined positions (50) within the three dimensional movement.

7. A system as claimed in claim 6 further comprising interpolating means for calculating by interpolation between user defined key frames locations of other frames in the sequence not having a user defined location.

8. A system as claimed in claim 1, further comprising means for displaying a locus (40) representing apparent three dimensional movement of a predefined part of the picture or of a set of axes.

9. A system claimed in claim 8, in which the video picture comprises a sequence of video frames, and the system comprises key frame defining means for defining at least some of the frames of said sequence as key frames for display at user defined positions (50) within the three dimensional movement and means for representing the locations of key frames in the movement by first markers (50) in the locus displayed on the display screen and for representing the locations of other frames by second markers (45 to 49) in the locus.

10. A video processing system for use in creating apparent three dimensional movement of a video picture on a display screen; comprising:
user operable input means (21,22) for providing positional data and control data representative of user manipulation thereof;
transforming means (24,25) responsive to said control data from said user operable input means for determining transformation data ;
position defining means (24,25) responsive to said transformation data for defining positions (50) of a predetermined element of said video picture during said movement;
locus signal generating means (24,27) responsive to said position defining means for generating locus signals representing a locus (40) connecting said positions to depict the movements of said element;
displaying means (20) connected to receive said locus signals for displaying the locus; and said transforming means controlling apparent translational and/or rotational movement of the picture along the locus (40).

11. A system as claimed in claim 10, further comprising:
a source (29) of video signals representing a video picture;
processing means (24) responsive to said transformation data for processing said video signals to create processed video signals representing the video picture as moved in three-dimensional space;
combining means (28) for combining the transformed video data processed by the processor and the locus signals to produce combined signals representing a picture, transformed in accordance with said transformation data, in combination with said locus and wherein said displaying means is connected to receive said combined signals for displaying the transformed picture in combination with said locus.

12. A system as claimed in claim 11, in which said user operable input means comprises a pressure sensitive stylus (21) and a touch tablet (22), the system further comprising:
cursor generating means (24,27) for generating a cursor signal representing a cursor for display by the displaying means (20), the cursor signals representing the cursor at a position determined by user manipulation of said user operable input means; and
generating means (24,27) for generating axes signals representing a set of axes having a predetermined positional relationship to the picture for display with the picture,
the combining means (28) being arranged to combine the axes signals with said video signals such that the combined signal represents the set of axes positioned at the centre of the picture, thereby enabling manipulation of the picture to be effected by display of the set of axes on said displaying means and by rotation and/or translation of said picture by selection of said set of axes by positioning of the displayed cursor under the control of said user operable means.

13. A system as claimed in claim 11 or 12, further comprising key position defining means (24,27) responsive to user manipulation of said user operable input means (21,22) for defining the positions (50) in three-dimensional space of at least some manipulated frames of the video picture selected as key frames by said user manipulation of said user operable input means; and
wherein said locus signal generating means is responsive to said key position defining means to generate a locus including an indication of the positions of said key frames, and said processing means includes means for calculating automatically the positions of frames between the selected key frames.

14. A system as claimed in claim 13, further comprising interpolating means (25) for calculating by interpolation between user defined key frames the positions of other frames in the sequence not having a user defined position.

15. A system as claimed in any of claims 10 to 14, in which the locus signal generating means is arranged to generate locus signals in which the locations of key frames in the movement are represented by first markers (50) in the locus and the locations of other frames are represented by second markers (45 to 49) in the locus.

16. A video processing system as claimed in any of claims 10 to 15, wherein the locus signal generating means is arranged to generate signals representing a locus having markings (41 to 44) depicting the speed of movement of the video picture in three-dimensional space.

## Patentansprüche

1. Videoverarbeitungssystem zur Verwendung bei der Erzeugung einer dreidimensionalen Relativbewegung eines Videobilds auf einem Anzeigeschirm (20), wobei das System umfaßt:
- Mittel (24, 25, 27) zum Erzeugen mindestens einer Gruppe von eine vorbestimmte positionsmäßige Beziehung zu dem Bild besitzenden Achsen (31, 34, 36, 37) zur Anzeige zusammen mit dem Bild,
- benutzerseitig betätigbare Eingabemittel (21, 22) zum Erzeugen von Koordinaten- und Steuerdaten in Antwort auf benutzerseitige Bedienungen derselben sowie
- auf die benutzerseitig betätigbaren Eingabemittel ansprechende Verarbeitungsmittel (24, 25) zum Auswählen mindestens einer Achse aus der mindestens einen Gruppe von Achsen (31, 34, 36, 37) und zum Verarbeiten von Bilddaten, um eine rotatorische Relativbewegung des Bilds um den durch eine Gruppe benutzerseitig ausgewählter Achsen angegebenen Weg und/oder eine translatorische Relativbewegung in Richtung dieses Wegs zu steuern.

2. System nach Anspruch 1, bei dem die mindestens eine Gruppe von Achsen (31) in der Mitte des Bilds (33) angeordnet ist.

3. System nach Anspruch 1 oder 2, bei dem eine Mehrzahl von Gruppen von Achsen (31, 34, 36, 37) zur Anzeige erzeugt werden, wobei das System ferner Mittel (27) zum Anzeigen eines Laufzeigers auf dem Anzeigeschirm umfaßt, wobei die Position dieses Laufzeigers mit Hilfe der benutzerseitig betätigbaren Eingabemittel gesteuert wird, um eine Auswahl einzelner Gruppen von Achsen (31, 34, 36, 37) mittels des Laufzeigers zu ermöglichen.

4. System nach Anspruch 3, ferner umfassend Mittel (25) zum Festlegen der räumlichen Beziehung zwischen jeder Gruppe von Achsen unter benutzerseitiger Steuerung mittels des auf dem Anzeigeschirm angezeigten Laufzeigers.

5. System nach Anspruch 1, bei dem jede Gruppe von Achsen als Gruppe von die Orientierung der jeweiligen Achsen darstellenden Linien und als Gruppe von die jeweiligen Achsen identifizierenden Markierungen (X, Y, Z) angezeigt wird, wobei das System auf die Auswahl einer Markierung ansprechende Rotationsmittel zum Bewirken einer Rotation um die oder jede zugehörige Achse sowie auf die Auswahl einer Linie ansprechende Translationsmittel zum Bewirken einer translatorischen Bewegung in Richtung der zugehörigen Achse umfaßt.

6. System nach Anspruch 1, bei dem das Videobild eine Sequenz von Videoteilbildern (33) umfaßt und das System Schlüsselteilbild-Festlegungsmittel umfaßt, um zumindest einige der Teilbilder der Sequenz als Schlüsselteilbilder zur Anzeige an benutzerseitig festgelegten Positionen (50) innerhalb der dreidimensionalen Bewegung festzulegen.

7. System nach Anspruch 6, ferner umfassend Interpolationsmittel, um durch Interpolation zwischen benutzerseitig festgelegten Schlüsselteilbildern Orte weiterer Teilbilder in der Sequenz zu berechnen, die keinen benutzerseitig festgelegten Ort besitzen.

8. System nach Anspruch 1, ferner umfassend Mittel zum Anzeigen einer Ortskurve (40), welche eine dreidimensionale Relativbewegung eines vorher festgelegten Teils des Bilds oder einer Gruppe von Achsen repräsentiert.

9. System nach Anspruch 8, bei dem das Videobild eine Sequenz von Videoteilbildern umfaßt und das System Schlüsselteilbild-Festlegungsmittel umfaßt, um zumindest einige der Teilbilder der Sequenz als Schlüsselteilbilder zur Anzeige an benutzerseitig festgelegten Positionen (50) innerhalb der dreidimensionalen Bewegung festzulegen, sowie Mittel umfaßt, um die Orte von Schlüsselteilbildern in der Bewegung durch erste Marken (50) auf der auf dem Anzeigeschirm angezeigten Ortskurve darzustellen und um die Orte weiterer Teilbilder durch zweite Marken (45 bis 49) auf der Ortskurve darzustellen.

10. Videoverarbeitungssystem zur Verwendung bei der Erzeugung einer dreidimensionalen Relativbewegung eines Videobilds auf einem Anzeigeschirm, umfassend:
- benutzerseitig betätigbare Eingabemittel (21, 22) zum Bereitstellen von für eine benutzerseitige Bedienung derselben repräsentativen Positionsdaten und Steuerdaten,
- auf die Steuerdaten der benutzerseitig betätigbaren Eingabemittel ansprechende Umformungsmittel (24, 25) zum Bestimmen von Umformungsdaten,
- auf die Umformungsdaten ansprechende Positionsfestlegungsmittel (24, 25) zum Festlegen von Positionen (50) eines vorbestimmten Elements des Videobilds während der Bewegung,
- auf die Positionsfestlegungsmittel ansprechende Ortskurvensignalerzeugungsmittel (24, 27) zum Erzeugen von Ortskurvensignalen, welche eine die Positionen verbindende Ortskurve (40) zur Darstellung der Bewegungen des Elements repräsentieren,
- Anzeigemittel (20), welche so zugeschaltet sind, daß sie die Ortskurvensignale erhalten, um die Ortskurve anzuzeigen,
wobei die Umformungsmittel eine translatorische und/oder rotatorische Relativbewegung des Bilds längs der Ortskurve (40) steuern.

11. System nach Anspruch 10, ferner umfassend:
- eine Quelle (29) für Videosignale, welche ein Videobild repräsentieren,
- auf die Umformungsdaten ansprechende Verarbeitungsmittel (24) zum Verarbeiten der Videosignale, um verarbeitete Videosignale zu erzeugen, welche das Videobild entsprechend der Bewegung im dreidimensionalen Raum repräsentieren,
- Kombinationsmittel (28) zum Kombinieren der von der Verarbeitungsvorrichtung verarbeiteten umgeformten Videodaten und der Ortskurvensignale, um kombinierte Signale zu erzeugen, welche ein nach Maßgabe der Umformungsdaten umgeformtes Bild in Kombination mit der Ortskurve repräsentieren,
wobei die Anzeigemittel so zugeschaltet sind, daß sie die kombinierten Signale erhalten, um das umgeformte Bild in Kombination mit der Ortskurve anzuzeigen.

12. System nach Anspruch 11, bei dem die benutzerseitig betätigbaren Eingabemittel einen druckempfindlichen Stift (21) und eine Berührungstafel (22) umfassen, wobei das System ferner umfaßt:
- Laufzeigererzeugungsmittel (24, 27) zum Erzeugen eines Laufzeigersignals, welches einen Laufzeiger zur Anzeige durch die Anzeigemittel (20) repräsentiert, wobei die Laufzeigersignale den Laufzeiger an einer durch eine benutzerseitige Bedienung der benutzerseitig betätigbaren Eingabemittel bestimmten Position repräsentieren, und
- Erzeugungsmittel (24, 27) zum Erzeugen von Achsensignalen, welche eine Gruppe von eine vorbestimmte positionsmäßige Beziehung zu dem Bild besitzenden Achsen zur Anzeige zusammen mit dem Bild repräsentieren,
wobei die Kombinationsmittel (28) dazu ausgebildet sind, die Achsensignale mit den Videosignalen derart zu kombinieren, daß das kombinierte Signal die Gruppe von Achsen, positioniert in der Mitte des Bilds, repräsentiert, wodurch eine Manipulation des Bilds dadurch bewirkt werden kann, daß die Gruppe von Achsen auf den Anzeigemitteln angezeigt wird und das Bild rotatorisch und/oder translatorisch bewegt wird, indem die Gruppe von Achsen durch Positionierung des angezeigten Laufzeigers unter der Steuerung der benutzerseitig betätigbaren Mittel ausgewählt wird.

13. System nach Anspruch 11 oder 12, ferner umfassend auf eine benutzerseitige Bedienung der benutzerseitig betätigbaren Eingabemittel (21, 22) ansprechende Schlüsselpositions-Festlegungsmittel (24, 27) zum Festlegen der Positionen (50) zumindest einiger manipulierter, durch die benutzerseitige Bedienung der benutzerseitig betätigbaren Eingabemittel als Schlüsselteilbilder ausgewählter Teilbilder des Videobilds im dreidimensionalen Raum, wobei die Ortskurvensignalerzeugungsmittel auf die Schlüsselpositions-Festlegungsmittel ansprechen, um eine Ortskurve einschließlich einer Angabe der Positionen der Schlüsselteilbilder zu erzeugen, und wobei die Verarbeitungsmittel Mittel zum automatischen Berechnen der Positionen von Teilbildern zwischen den ausgewählten Schlüsselteilbildern umfassen.

14. System nach Anspruch 13, ferner umfassend Interpolationsmittel (25), um durch Interpolation zwischen benutzerseitig festgelegten Schlüsselteilbildern die Positionen weiterer Teilbilder in der Sequenz zu berechnen, die keine benutzerseitig festgelegte Position besitzen.

15. System nach einem der Ansprüche 10 bis 14, bei dem die Ortskurvensignalerzeugungsmittel dazu ausgebildet sind, Ortskurvensignale zu erzeugen, bei denen die Orte von Schlüsselteilbildern in der Bewegung durch erste Marken (50) auf der Ortskurve repräsentiert sind und die Orte weiterer Teilbilder durch zweite Marken (45 bis 49) auf der Ortskurve repräsentiert sind.

16. Videoverarbeitungssystem nach einem der Ansprüche 10 bis 15, bei dem die Ortskurvensignalerzeugungsmittel dazu ausgebildet sind, Signale zu erzeugen, welche eine Ortskurve mit Markierungen (41 bis 44) repräsentieren, die die Bewegungsgeschwindigkeit des Videobilds im dreidimensionalen Raum darstellen.

## Revendications

1. Système de traitement vidéo destiné à être utilisé pour créer un mouvement en apparence tridimensionnel d'une image vidéo sur un écran d'affichage (20), le système comprenant :
des moyens (24, 25, 27) pour engendrer au moins un jeu d'axes (31, 34, 36, 37) possédant une relation de position prédéterminée par rapport à l'image pour un affichage avec l'image ;
des moyens d'entrée (21, 22) opérables par un utilisateur pour engendrer des données de coordonnées et de commande en réponse à des manipulations de ceux-ci par un utilisateur ; et
des moyens de traitement (24, 25) répondant aux dits moyens d'entrée opérables par un utilisateur pour sélectionner un axe au moins dans un au moins desdits jeux d'axes (31, 34, 36, 37) et pour traiter des données d'image afin de commander un mouvement de l'image en apparence de rotation autour, et/ ou un mouvement en apparence de translation dans la direction du chemin représenté par un jeu d'axes sélectionné par un utilisateur.

2. Système comme revendiqué dans la revendication 1, dans lequel ledit un jeu d'axes (31) au moins est placé au centre de l'image (33).

3. Système comme revendiqué dans la revendication 1 ou dans la revendication 2 dans lequel une pluralité de jeux d'axes (31, 34, 36, 37) sont engendrés pour un affichage,
le système comportant en outre des moyens (27) pour afficher un curseur sur l'écran d'affichage, la position de ce curseur étant commandée par une utilisation des moyens d'entrée opérables par un utilisateur pour permettre une sélection de jeux individuels d'axes (31, 34, 36, 37) à l'aide du curseur.

4. Système comme revendiqué dans la revendication 3, comprenant en outre des moyens (25) pour définir la relation spatiale entre chaque jeu d'axes sous la commande d'un utilisateur à l'aide du curseur affiché sur l'écran d'affichage.

5. Système comme revendiqué dans la revendication 1 dans lequel chaque jeu d'axes est affiché comme un jeu de lignes représentant l'orientation de chaque axe et un jeu d'étiquettes (X, Y, Z) qui identifient chaque axe, le système comportant des moyens de rotation qui répondent à la sélection d'une étiquette pour effectuer une rotation de l'axe ou de chaque axe associé ; et des moyens de translation qui répondent à la sélection d'une ligne pour effectuer un mouvement de translation dans la direction de l'axe associé .

6. Système comme revendiqué dans la revendication 1, dans lequel l'image vidéo comporte une séquence de trames vidéo (33), et le système comporte des moyens de définition de trames clés pour définir au moins certaines des trames de ladite séquence comme des trames clés pour un affichage en des positions (50) définies par un utilisateur dans le mouvement tridimensionnel.

7. Système comme revendiqué dans la revendication 6 comprenant en outre des moyens d'interpolation pour calculer, par une interpolation entre des trames clé définies par un utilisateur, des emplacements d'autres trames dans la séquence n'ayant pas d'emplacement défini par un utilisateur.

8. Système comme revendiqué dans la revendication 1, comportant en outre des moyens pour afficher un lieu (40) représentant un mouvement en apparence tridimensionnel d'une partie prédéfinie de l'image ou d'un jeu d'axes.

9. Système comme revendiqué dans la revendication 8, dans lequel l'image vidéo comporte une séquence de trames vidéo, et le système comporte des moyens de définition de trames clés pour définir au moins certaines des trames de ladite séquence comme des trames clés pour un affichage en des positions (50) définies par un utilisateur dans le mouvement en apparence tridimensionnel et des moyens pour représenter les emplacements des trames clés dans le mouvement par des premiers marqueurs (50) dans le lieu affiché sur l'écran d'affichage et pour représenter les emplacements d'autres trames par des deuxièmes marqueurs (45 à 49) dans le lieu.

10. Système de traitement de la vidéo mis en oeuvre pour créer un mouvement en apparence tridimensionnel d'une image vidéo sur un écran d'affichage, comportant :
des moyens d'entrée (21, 22) opérables par un utilisateur pour fournir des données de position et des données de commande représentant une manipulation de ceux-ci par un utilisateur ;
des moyens de transformation (24, 25) répondant aux dites données de commande issues des moyens d'entrée opérables par un utilisateur pour déterminer des données de transformation ;
des moyens de définition de position (24, 25) répondant aux dites données de transformation pour définir les positions (50) d'un élément prédéterminé de la dite image vidéo pendant ledit mouvement ;
des moyens formant générateur de signal de lieu (24, 27) répondant aux dits moyens de définition de position pour engendrer des signaux de lieu représentant un lieu (40) reliant lesdites positions pour représenter les mouvements dudit élément ;
un moyen d'affichage (20) connecté pour recevoir lesdits signaux de lieu pour afficher le lieu ; et
lesdits moyens de transformation commandant un mouvement de l'image en apparence de translation et/ ou de rotation le long du lieu (40).

11. Système comme revendiqué dans la revendication 10, comportant en outre :
une source (29) de signaux vidéo représentant une image vidéo ;
des moyens de traitement (24) répondant aux dites données de transformation pour traiter lesdits signaux vidéo afin de créer des signaux vidéo traités représentant l'image vidéo lorsqu'elle est déplacée dans un espace tridimensionnel ;
des moyens de combinaison (28) pour combiner les données transformées traitées par le processeur et les signaux de lieu pour produire des signaux combinés représentant une image, transformés conformément aux dites données de transformation, en combinaison avec ledit lieu et ledit moyen d'affichage étant relié pour recevoir lesdits signaux combinés afin d'afficher l'image transformée en combinaison avec ledit lieu.

12. Système comme revendiqué dans la revendication 11, dans lequel lesdits moyens d'entrée opérables par un utilisateur comportent un stylet (21) sensible à la pression et une tablette sensible au toucher, le système comportant en outre :
des moyens formant générateur de curseur (24, 27) pour engendrer un signal de curseur représentant un curseur pour un affichage par le moyen d'affichage (20), les signaux de curseur représentant le curseur en une position déterminée par une manipulation d'utilisateur desdits moyens d'entrée opérables par un utilisateur ; et
des moyens formant générateur (24, 27) pour engendrer des signaux d'axes représentant un jeu d'axes possédant une relation de position prédéterminée avec l'image pour un affichage avec l'image,
les moyens de combinaison (28) étant agencés pour combiner les signaux d'axes avec lesdits signaux vidéo de telle manière que les signaux combinés représentent le jeu d'axes placé au centre de l'image, rendant ainsi possible d'effectuer une manipulation de l'image par un affichage du jeu d'axes sur ledit moyen d'affichage et par une rotation et/ ou une translation de ladite image par une sélection dudit jeu d'axes en positionnant le curseur affiché sous la commande desdits moyens opérables par un utilisateur.

13. Système comme revendiqué dans la revendication 11 ou dans la revendication 12 comportant en outre des moyens de définition de positions clés (24, 27) répondant à une manipulation d'utilisateur desdits moyens d'entrée (21, 22) opérables par un utilisateur pour définir les positions (50) dans l'espace tridimensionnel d'au moins certaines trames manipulées de l'image vidéo sélectionnées comme trames clés par ladite manipulation d'utilisateur desdits moyens d'entrée (21, 22) opérables par un utilisateur ; et
dans lequel ledit moyen formant générateur de signal de lieu répond auxdits moyens de définition de positions clés pour engendrer un lieu incluant une indication des positions desdites trames clés, et lesdits moyens de traitement incluent des moyens de calcul pour calculer de manière automatique les positions des trames entre les trames clés sélectionnées.

14. Système comme revendiqué dans la revendication 13, comportant en outre des moyens d'interpolation (25) pour calculer par interpolation entre des trames clés définies par un utilisateur les positions d'autres trames de la séquence n'ayant pas une position définie par un utilisateur.

15. Système comme revendiqué dans l'une quelconque des revendications 10 à 14, dans lequel les moyens formant générateur de signal de lieu sont agencés pour engendrer des signaux de lieu dans lesquels les emplacements de trames clés dans le mouvement sont représentés par des premiers marqueurs (50) dans le lieu et les emplacements des autres trames sont représentés par des deuxièmes marqueurs (45 à 49) dans le lieu.

16. Système de traitement vidéo comme revendiqué dans l'une quelconque des revendications 10 à 15, dans lequel les moyens formant générateur de signal de lieu sont agencés pour engendrer des signaux représentant un lieu ayant des marquages (41 à 44) représentant la vitesse de mouvement de l'image vidéo dans un espace tridimensionnel.
